# EUROPEAN PATENT APPLICATION

(11) **EP 2 617 991 A1**
(43) Date of publication of application: **24.07.2013**
(21) Application number: 12405008.9
(22) Date of filing: 18.01.2012
(51) Int. Cl.: F03D 3/02, F03D 3/04

(54) **Vertical axis wind turbine**

(71) Applicant: Roth, Jörg Walter, 3065 Bolligen (CH)
(72) Inventor: Roth, Jörg Walter, 3065 Bolligen (CH)
(74) Representative: Rüfenacht, Philipp Michael

(57) **Abstract**

A vertical axis wind turbine (1) comprises a rotor (30) including a vertical axis and several blades (33) connected to the vertical axis, the blades (33) being arranged in such a way that kinetic energy of wind causes rotation of the vertical axis and a fairing (10, 50) surrounding the rotor (30) at least partly, the rotor (30) being rotatable with respect to the fairing (10, 50). The blades (33) are airfoil-shaped. The airfoil-shaped blades (33) produce an aerodynamic force. Suitably designing the airfoil geometry and choosing the blades' (33) orientation with respect to the incoming wind, lift may be generated which increases the wind force acting on the blade (33), therefore the rotor's (30) speed and finally efficiency of the rotor (30). Furthermore, the turbine (1) may be operated already at lower wind speeds.

## Description

### Technical Field

The invention relates to a vertical axis wind turbine comprising a rotor including a vertical axis and several blades connected to the vertical axis, the blades being arranged in such a way that kinetic energy of wind causes rotation of the vertical axis.

### Background Art

A wind turbine converts kinetic energy from the wind into mechanical energy in order to drive an electric generator or other machinery, such as for grinding grain or pumping water. Wind turbines can rotate about a horizontal or a vertical axis, wherein the former is more common. Modern horizontal axis wind turbines have a supporting tower for a turbine with 3 blades and an electric generator. Vertical axis wind turbines have the main rotor shaft arranged vertically. Examples of vertical axis wind turbines are Darrieus turbines, Giromill turbines, Savonius wind turbines.

Presently known wind turbines operate at wind speeds of about 8-10 m/s (29-36 km/h) to 20 m/s (72km/h). Wind turbines with a capacity of up to 10 MW. Heights of 160 m and a rotor diameter of 145 m (horizontal axis) or heights of 230 m and 260 m rotor diameter (vertical axis) are known.

The installation of wind turbines is complex. At higher wind speeds above 22-25 m/s (75-90 km/h), the wind turbines have to be stopped completely. At low wind speeds below 8-10 m/s (29-36 km/h) the wind turbines do not operate.

### Summary of the invention

It is the object of the invention to create a wind turbine pertaining to the technical field initially mentioned, that has high efficiency, operates in a wider range of wind speeds and that is simple in installation.

The solution of the invention is specified by the features of the independent claim. According to the invention a vertical axis wind turbine comprises:
a) a rotor including a vertical axis and several blades connected to the vertical axis, the blades being arranged in such a way that kinetic energy of wind causes rotation of the vertical axis; and
b) a fairing surrounding the rotor at least partly, the rotor being rotatable with respect to the fairing;
whereas the blades are airfoil-shaped.

In particular, the fairing according to the invention is rotatably fixed. However, in certain embodiments it may be rotatable about the same axis as the rotor; however its rotational movement is always independent from rotation of the rotor.

Depending on the wind direction and velocity distribution the airfoil-shaped blades will produce an aerodynamic force. Suitably designing the airfoil geometry and choosing the blades' orientation with respect to the incoming wind, lift may be generated which increases the wind force acting on the blade, therefore the rotor's speed and finally efficiency of the rotor. Furthermore, the turbine may be operated already at lower wind speeds.

The airfoil shape may be similar to the shape of an airplane wing, i. e. having a rounded leading edge, followed by a sharp trailing edge. Furthermore, it can feature an asymmetric camber.

In addition, the vertical axis wind turbine according to the invention produces less noise than formerly known wind turbines. Moreover, the wind turbine according to the invention is less dangerous for animals, in particular birds.

Preferably, the rotor and the fairing are essentially cylindrical structures. This allows for optimum balance of the rotor and an equal circumferential distribution of the wind forces acting on the rotor.

Other geometries are possible, such as prismatic with polygonal cross-section.

Preferably, a cross-section of the blades is essentially constant along a longitudinal axis of the blades, i. e. along the vertical axis of the blades of the installed rotor. This facilitates the manufacture and installation of the rotor, is cost-efficient, and ensures an equal axial distribution of the wind forces acting on the rotor.

Other geometries are possible. As an example, the overall shape of the blade may be essentially the same along the blade's length, but the size of the blade may be chosen larger in a middle section of the blade.

In a preferred embodiment, each of the blades is mounted to the rotor in such a way that it is rotatable about a vertical axis distant from the vertical axis of the rotor. Furthermore, the blade is fixable in a plurality of rotational positions. The positions may be discrete or continuous (within a given angular range). This allows for adjusting the turbine to momentary and/or predominant wind conditions (speed, direction, etc.). Optimum adjustment ensures optimum efficiency of the turbine.

In particular, the blades are rotatable about vertical axes running through their longitudinal extension. This allows for a simple construction, requiring little space for the rotation of the blades. In particular, the rotational axes of the blades are vertical axes parallel to the vertical axis of the rotor, arranged on a circle with respect to the vertical axis of the rotor. However other solutions are possible, where the rotation axes for the blades run outside of the blades.

In a preferred embodiment, the fairing includes one or more wind deflectors. At least during operation of the turbine, adjacent wind deflectors encompass an opening for introducing wind to the rotor space enclosed by the fairing. The fairing thus has the function of accelerating the wind to higher speeds, as well as increasing the cross-section for collecting wind. Measurements have shown that the wind speed in the region of the rotor blades may be more than double the initial wind speed outside the turbine. The wind deflectors deposit the accelerated wind directly onto the blades of the rotor not allowing the wind to escape until it gets to another opening of the fairing, where it leaves. The wind deflectors are particularly advantageous in connection with the airfoil-shape of the rotor blades: Employing suitably formed wind deflectors, the build-up of lift (Bernoulli's principle) may be enhanced. Thus, the efficiency of the turbine is greatly enhanced.

Advantageously, the one or more wind deflectors are rotatable about a vertical axis. This allows for adjusting the turbine to momentary and/or predominant wind conditions (speed, direction, etc.). This is especially advantageous in connection with the airfoil-shaped rotor blades as adjusting the wind deflectors allows for optimizing the transmission of the wind force to the rotor by push and lift forces. The rotation axes for the wind deflectors may be arranged close to the radial inner end of the deflectors.

It is to be noted that these rotatable wind deflectors and the further optional features of such wind deflectors discussed below can be advantageous not only in the context of the turbine according to the invention, but also in the context of similar vertical axis wind turbines where the rotor blades are not airfoil-shaped.

Alternatively, the wind deflectors are fixed.

Preferentially, the one or more wind deflectors are dimensioned and arranged in such a way that they may be rotated into a position where a wind flow to the rotor is essentially prohibited. This means that the rotor will not be driven in this position of the deflectors, independent from the exterior wind strength. As an example, the deflectors may be rotated into such an arrangement that all the openings between adjacent wind deflectors are completely covered by the wind deflectors themselves. This allows for halting the rotor in case of very strong winds or for maintenance work without the need for an additional rotor brake. This simplifies the construction as well as maintenance and makes the turbine less expensive.

Advantageously, a length of the wind deflectors is more than a radius of the rotor. This allows for optimum wind collection with a preferred balance between rotated and fixed parts. Compared to a bigger rotor exploiting the same cross section of wind the costs of the turbine according to the invention with large wind deflectors are much lower, whereas the reduction of efficiency is comparably smaller.

Alternatively, smaller deflectors may be used, especially if the number of deflectors is increased.

Preferably, the turbine comprises a support structure, whereas the rotor is accommodated within and mounted to the support structure. The support structure provides for mechanical stability even in case of strong wind forces.

Advantageously, the support structure comprises two concentric shells which are distanced from each other, the two shells being mechanically connected to each other. Different geometries of the shells are possible. In particular, they may be prismatic, having the shape of a regular polygon or they may be cylindrical. Preferably, the shells are lattice constructions. This provides high mechanical stability at minimum susceptibility to heavy winds as well as minimum loss of wind energy.

Preferably, the wind deflectors are mounted to an inner shell of the two concentric shells. The rotor being accommodated within the inner shell, this allows for optimum guidance of the captured wind to the rotor blades. Furthermore, the overall space requirements for the turbine are minimized as all or part of the space required by the wind deflectors lies within the envelope of the support structure.

Alternatively, the wind deflectors may be mounted to the outer shell or other components of the support structure. Furthermore, it is possible to mount the wind deflectors to components independent from the support structure of the rotor.

Advantageously, the turbine includes a base structure. The support structure is supported by the base structure and affixed thereto. In a preferred embodiment, the base structure is lattice like and has a footprint which is larger than the footprint of the support structure. Preferably, the support structure is not directly connected to the underlying base (such as a roof of a building or a concrete base) but only to the base structure. Furthermore, steel cables may extend between the base structure and the support structure. These measures do not only improve the stability of the turbine but also help to avoid vibrations caused by the rotation of the rotor as well as the wind forces acting on the turbine.

Preferably, the rotor has a diameter of 4 m to 150m and a height of 2 m to 150 m.

In a preferred embodiment, the rotor includes 2 blades to 60 blades, which are from 20 cm to 4 m wide and from 2 m to 150 m high.

Especially large diameters allow for generating electricity without any kind of revolutions multiplier, which avoids to have many mechanisms in movement.

Other advantageous embodiments and combinations of features come out from the detailed description below and the totality of the claims.

### Brief description of the drawings

The drawings used to explain the embodiments show:
- Fig. 1: a top view of an embodiment of a wind turbine according to the invention;
- Fig. 2: a top view of the support structure of the wind turbine;
- Fig. 3: a top view of the base structure of the wind turbine;
- Fig. 4: a perspective view of a rotor blade of the wind turbine;
- Fig. 5: a top view of the attachment of the rotor blade to the rotor;
- Fig. 6: a top view of the wind turbine showing the main wind flow;
- Fig. 7: a detailed view of a single sector of Figure 6;
- Fig. 8: a top view of the wind turbine showing the adjustability of the wind deflectors; and
- Fig. 9: a detailed view of a single deflector of Figure 8.
In the figures, the same components are given the same reference symbols.

### Preferred embodiments

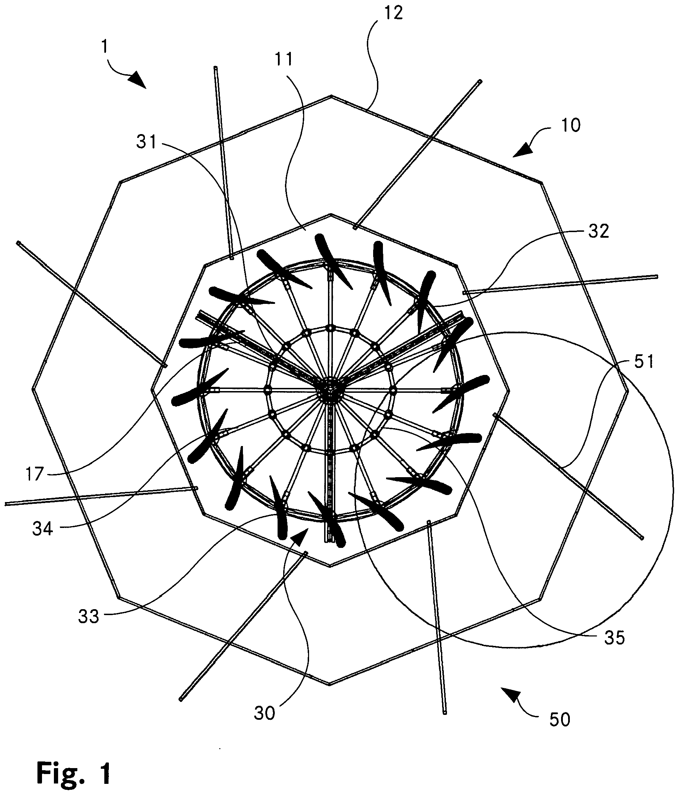

Figure 1 is a top view of an embodiment of a wind turbine according to the invention. The wind turbine 1 comprises a fixed support structure 10 as well as a rotor 30 which is rotatably supported by the support structure 10.

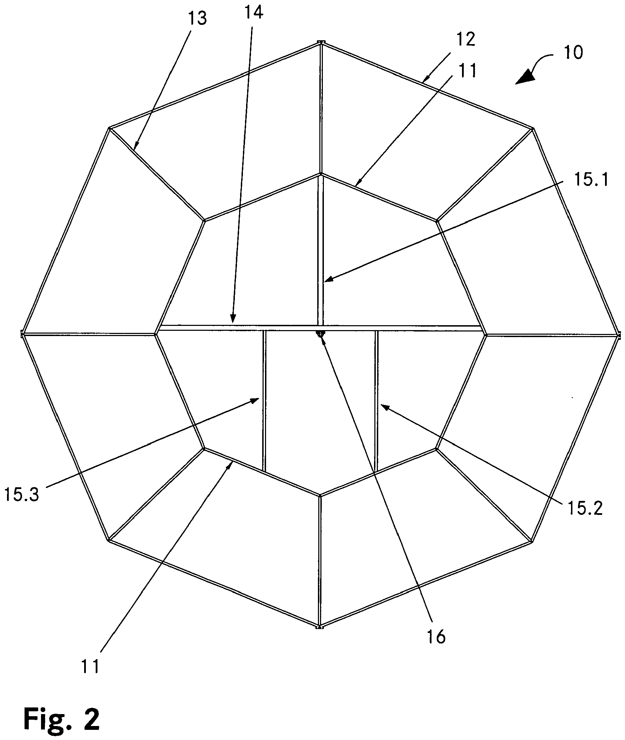

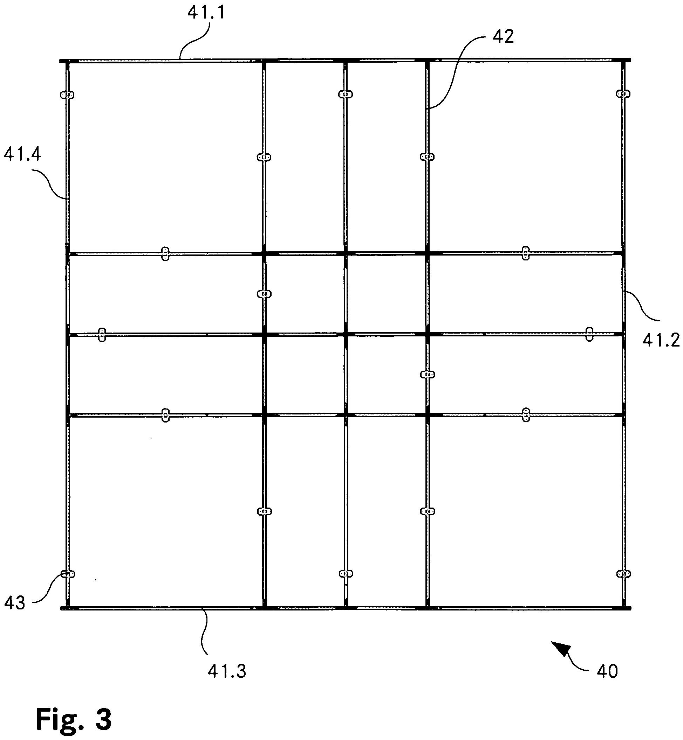

The support structure 10 is shown in more detail in Figure 2. It comprises an inner octagon 11 as well as an outer octagon 12, both having a regular octagonal footprint. The two octagons 11, 12 are concentrically arranged and the corresponding corners being on radii originating from the center. Essentially a vertical column is arranged in each corner of the octagons 11, 12, extending and firmly connected to a base structure (described in more detail below, in connection with Figure 3). The vertical columns of adjacent corners of a given octagon 11, 12 are connected by horizontal beams. The columns in corresponding corners of the two octagons 11, 12 are connected by a number of struts 13. Whereas Figure 2 shows a top view of the support structure 10 only, it goes without saying that usually a plurality of struts 13 are arranged along the height of the columns (and thus the support structure), for stable connection of the two columns.

Four inner beams 14, 15.1, 15.2, 15.3 are attached to the inner octagon 11 in a top region thereof. A central beam 14 of the inner beams extends substantially across the inner octagon 11 and runs close to the center of the two octagons 11, 12, being only slightly offset from a geometric center line of the inner octagon 11, dividing the inner octagon 11 into a slightly smaller region and a slightly larger region. The further inner beams 15.1...15.3 extend perpendicular to the central beam 14 and connect the horizontal beams of the inner octagon 11 to the central beam 14. A first beam 15.1 of the further inner beams is attached to the central beam 14 close to the geometric center of the inner octagon 11 and runs within the slightly smaller region of the inner octagon 11. The other two further beams 15.2, 15.3 are attached to the central beam 14 on the opposing side, being laterally offset from the center and run in the slightly larger region of the inner octagon 11. A top bearing 16 for the main rotation axis of the rotor is attached to the central beam 14. It is arranged exactly in the geometric center of the inner octagon 11.

The rotor 30 is accommodated within the inner octagon 11. The shape of the rotor 30 is essentially cylindrical. It comprises a vertical axis 31 supported in the top bearing 16 as well as a bottom bearing fixed to a flat tripod structure 17 fixed to the base structure. A top ring 32 and a bottom ring (not visible in Figure 1) are attached to the vertical axis 31 in such a way that they rotate together with the vertical axis 31. Sixteen rotor blades 33 are mounted between the two rings, having equal angular distance to each other (i. e. 22.5° each). At all the mount points the rings are connected to the vertical axis 31 by horizontal struts 34. Further, at about half the radius of the struts 34 they are connected with each other by a reinforcement ring 35.

Eight wind deflectors 51 are rotatably attached to the inner octagon 11 of the support structure 10, as well as to the base structure. The wind deflectors 51 are essentially flat plates which may be rotated about a vertical axis arranged close and running parallel to an inner edge of the wind deflectors 51. The corresponding attachment points are arranged at about 1/5 of the distance from a corner of the inner octagon 11 to the next adjacent corner against the direction of rotation of the rotor 30. Together with the support structure 10 the wind deflectors 51 constitute a fairing 50 of the wind turbine.

The vertical axis of the rotor 30 (and thus essentially the rotor itself) may be between 2 meters and 150 meters long. The radius of the rotor 30 may amount from 2 meters to 75 meters (this resulting in a circumference between 4 meters and 150 meters). This novel eolic turbine has a generator whose winding is attached to the base where the lower bearing of the main axis is located.

The wind turbine 1 may be used for generating electric energy. In that case it is preferred that the rotor 30 is the rotor of a generator, featuring permanent magnets attached to the rotor 30. The stator of the generator cooperating with the rotor is attached to the base structure.

Figure 3 is a top view of the base structure 40 of the wind turbine. The base structure consists of a number of horizontal bars which extend along perpendicular lines and are connected to each other. More precisely, the base structure 40 consists of four outer bars 41.1...41.4, being connected together in their corners, spanning the quadratic footprint of the base structure 40 as well as of a number of inner bars 42 building a lattice structure connecting the outer bars 41.1...41.4 to each other. The inner bars 42 are arranged in such a way that the quadratic footprint of the base structure 40 is divided into three times three nearly quadratic subareas. The central subarea is divided into two times two quadratic subareas. All inner bars 42 are connected to each other as well as to the outer bars 41.1...41.4 at their ends. A number of the outer bars 41.1...41.4 as well as of the inner bars 42 are affixed employing suitable anchors to the underlying floor which may be a roof of a building, a concrete base etc.

The dimensions of the footprint of the base structure 40 are chosen such that the entire octagonal support structure 10 may be supported by the base structure 40, i. e. the footprint of the support structure 10 fits within the footprint of the base structure 40. Employing suitable adaptors (e. g. for screw connections), the vertical columns of the support structure 10 are directly connected to the horizontal bars 41.1...41.4, 42 or to further diagonal connection bars that are affixed with their ends to two of the horizontal bars 41.1...41.4, 42. Similarly, the flat tripod structure 17 for the bottom bearing for the rotor axis is supported by and attached to the base structure 40.

Further auxiliary elements may be attached on top of the base structure 40, such as arcuate guide and/or locking elements for the wind deflectors 51. They extend along the path of the free edge of the wind deflectors 51 and allow for locking the corresponding wind element 51 in a desired angular orientation.

Finally, steel cables are attached with one end to the corners of the base structure 40 and with the other end to suitable locations of the beams of the outer octagon 12 of the support structure 10. The specific arrangement is chosen according to the main wind directions and strengths expected as well as to the operational parameters of the wind turbine.

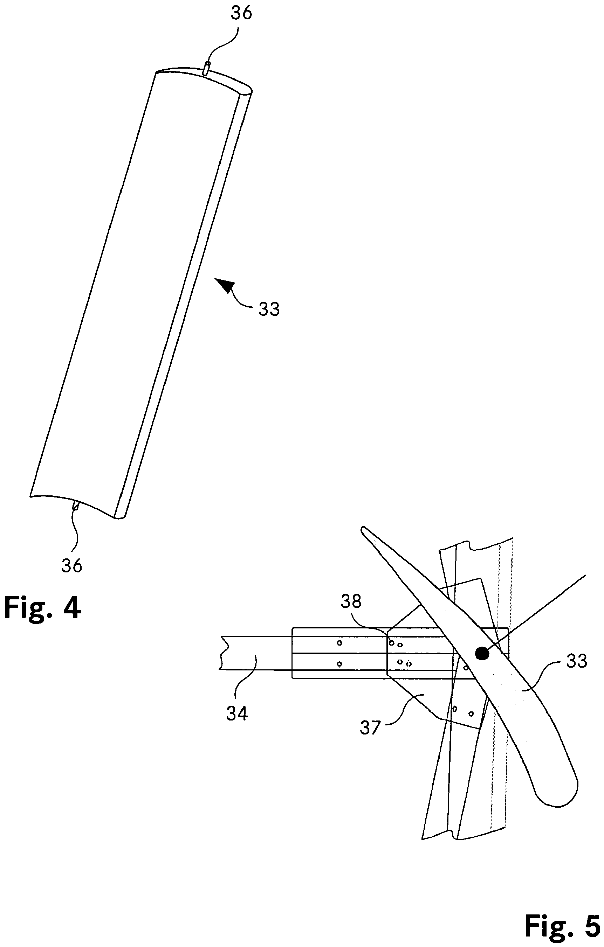

Figure 4 is a perspective view of a rotor blade 33 of the wind turbine. The rotor blade 33 has an airfoil cross section which is constant along the longitudinal (vertical) extension of the blade. Bearing pins 36 are attached to the top as well as bottom surfaces of the rotor blade 33.

Figure 5 is a top view of the attachment of the rotor blade to the rotor. An attachment panel 37 is attached to the strut 34 as well as the bottom ring of the rotor (and to the top ring which is not visible in Figure 5). The attachment panel features a bearing accommodating the bearing pin of the rotor blade 33. Furthermore, it features a number of openings 38 which allow for inserting locking screws for holding the rotor blade 33 in a previously chosen position.

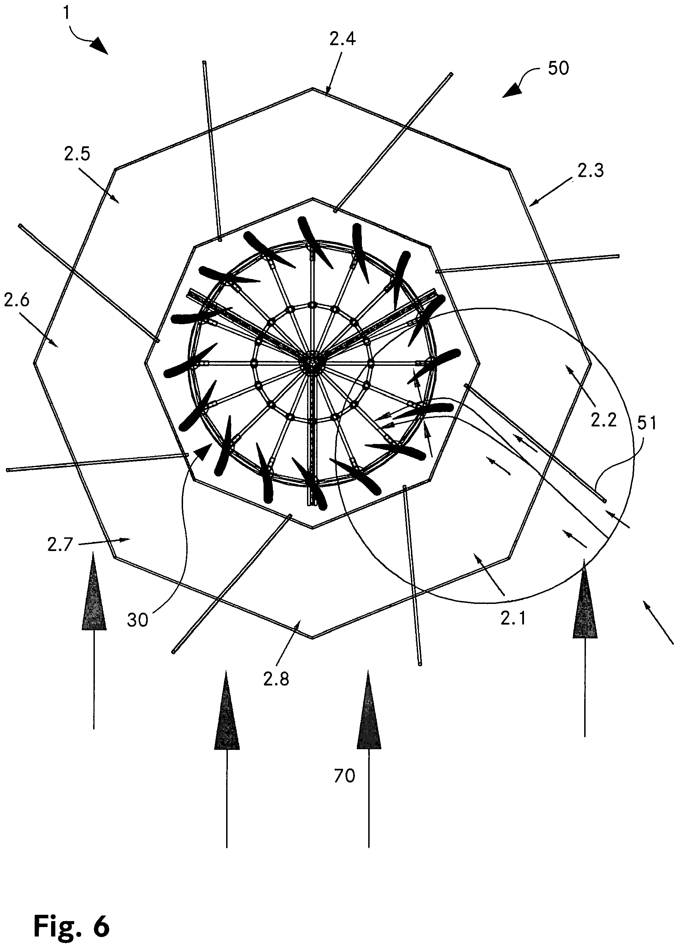

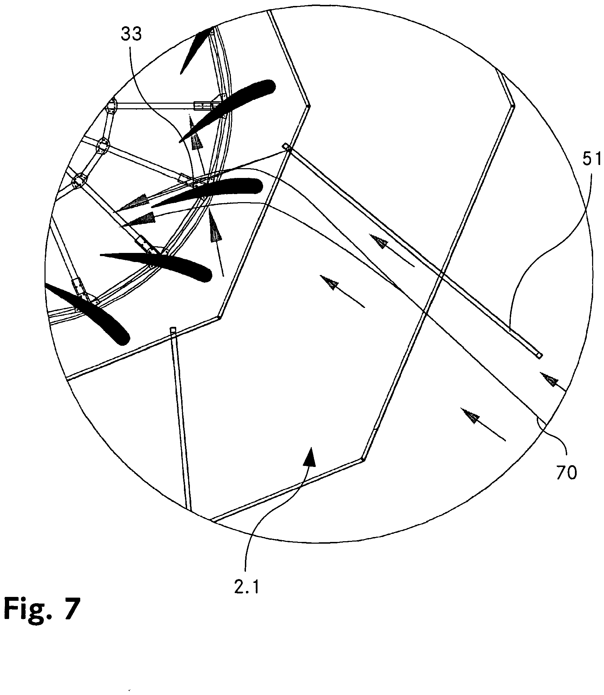

Figure 6 is a top view of the wind turbine showing the main wind flow, Figure 7 is a detailed view of a single sector, indicated by a circle in Figure 6. The circumference of the wind turbine is divided into eight sectors 2.1...2.8 by the wind deflectors 51. Wind 70 coming from a given direction is collected by the wind deflectors 51, deflected and guided to the rotor 30. In the shown configuration the cross section capturing wind is considerably larger than that of the rotor 30 alone and it is even larger than the cross-section of the outer octagon 12.

Wind 70 deflected by the wind deflector 51 of the first sector 2.1 is guided to the rotor 30. The deflected wind 70 flows around a rotor blade 33 passing predominantly the leeward region of the first sector 2.1. The direct wind 70 predominantly exerts a pushing force onto the blade 33, the deflected wind primarily exerts a pulling (lift) force due to the airfoil cross section of the blade 33. Both forces aid at driving the rotor 30. The total force is transmitted to the rotor 30 by the locking pins.

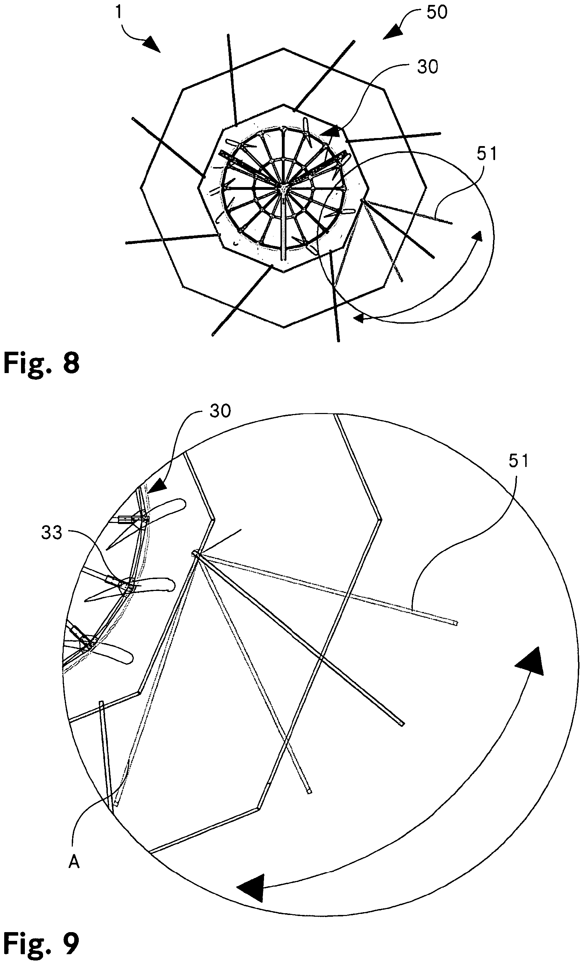

Fig. 8 is a top view of the wind turbine showing the adjustability of the wind deflectors, Figure 9 is a detailed view of a single deflector, showing the region indicated by a circle in Figure 8. The wind deflectors 51 may be adjusted in a number of rotational positions about their vertical rotation axis. Choosing the individual angular positions of the wind deflectors 51 the cross section capturing wind but in particular also the deflection of the captured wind (i. e. the direction in which the wind is guided to the rotor blades 33) as well as its compression may be adjusted.

Positioning the wind deflectors 51 in a position where they essentially cover the rotor 30 from any impact of wind (Position A), the rotor 30 is halted. This is useful in case of very strong winds or for maintenance work. A rotor brake is spared. In addition, the wind deflectors 51 can be regulated by the rotor speed: when the revolutions of the main axis become high the wind deflectors 51 begin to close.

The invention is not restricted to the described embodiment. Especially the build-up and the geometry of the support structure, the base structure as well as of the rotor may be varied. In particular, the shape of the rotor may be a regular polygon with another number of sides. Furthermore, instead of generating electrical energy, the inventive wind turbine can also be used to extract water by attaching a hydraulic pump directly to the main axis of the rotor.

The adjustment of the rotor blades and/or the wind deflectors may be automatized and/or synchronized. As an example, the angle of all the rotor blades may be synchronized by means of double Bowden cables running along the struts to the center of the rotor, where they are joined to a central adjustment mechanism. After adjustment of the angle the blades may be fixed manually (as described above) or automatically, e. g. by locking bolts accommodated within the attachment panel and selectively releasable by electromagnets.

In summary, it is to be noted that a vertical axis wind turbine has been presented that can be operated at low wind speeds and at high wind speeds and shows high efficiency.

## Claims

1. Vertical axis wind turbine, comprising:
a) a rotor (30) including a vertical axis (31) and several blades (33) connected to the vertical axis (31), the blades (33) being arranged in such a way that kinetic energy of wind causes rotation of the vertical axis (31); and
b) a fairing (50) surrounding the rotor (30) at least partly, the rotor (30) being
rotatable with respect to the fairing (50);
whereas
c) the blades (33) are airfoil-shaped.

2. Turbine according to claim 1, **characterized in that** the rotor (30) and the fairing (50) are essentially cylindrical structures.

3. Turbine according to claim 2, **characterized in that** a cross-section of the blades (33) is essentially constant along a longitudinal axis of the blades (33).

4. Turbine according to one of claims 1 to 3, **characterized in that** each of the blades (33) is mounted to the rotor (30) in such a way that it is rotatable about a vertical axis distant from the vertical axis (31) of the rotor (30), in particular about a vertical axis running through a longitudinal extension of the blade (33), and **in that** the blade (33) is fixable in a plurality of rotational positions.

5. Turbine according to one of claims 1 to 4, **characterized in that** the fairing (50) includes one or more wind deflectors (51).

6. Turbine according to claim 5, **characterized in that** the one or more wind deflectors (51) are rotatable about a vertical axis.

7. Turbine according to claim 6, **characterized in that** the one ore more wind deflectors (51) are dimensioned and arranged in such a way that they may be rotated into a position where a wind flow to the rotor (30) is essentially prohibited.

8. Turbine according to one of claims 5 to 7, **characterized in that** a length of the wind deflectors (51) is more than a radius of the rotor (30).

9. Turbine according to one of claims 1 to 8, **characterized by** a support structure (10), whereas the rotor (30) is accommodated within and mounted to the support structure (10).

10. Turbine according to claim 9, **characterized in that** the support structure (10) comprises two concentric shells (11, 12) which are distanced from each other, the two shells (11, 12) being mechanically connected to each other.

11. Turbine according to claim 10 and one of claims 5 to 8, **characterized in that** the wind deflectors (51) are mounted to an inner shell (11) of the two concentric shells (11, 12).

12. Turbine according to one of claims 9 to 11, **characterized by** a base structure (40), whereas the support structure (10) is supported by the base structure (40) and affixed thereto.

13. Turbine according to one of claims 1 to 12, **characterized in that** the rotor (30) has a diameter of 4 m to 150 m and a height of 2 m to 150 m.

14. Turbine according to one of claims 1 to 13, **characterized in that** the rotor (30) includes 2 blades to 60 blades (33), which are from 20 cm to 4 m wide and from 2 m to 150 m high.
